(19) Europäisches Patentamt
European Patent Office
Office européen des brevets

(11) **EP 1 138 941 B1**

(12) **EUROPÄISCHE PATENTSCHRIFT**

(45) Veröffentlichungstag und Bekanntmachung des Hinweises auf die Patenterteilung:
**17.06.2009 Patentblatt 2009/25**

(51) Int Cl.:
***F03B 15/04*** *(2006.01)*

(21) Anmeldenummer: **01890087.8**

(22) Anmeldetag: **20.03.2001**

(54) **Verfahren zur Ermittlung der Nettofallhöhe von Turbinen**

Method to determine the net head for turbines

Méthode de détermination de chute pour turbines

(84) Benannte Vertragsstaaten:
**AT BE CH CY DE DK ES FI FR GB GR IE IT LI LU MC NL PT SE TR**

(30) Priorität: **31.03.2000 AT 2442000 U**

(43) Veröffentlichungstag der Anmeldung:
**04.10.2001 Patentblatt 2001/40**

(73) Patentinhaber: **Steiner, Reinhard**
**8240 Friedberg (AT)**

(72) Erfinder: **Steiner, Reinhard**
**8240 Friedberg (AT)**

(74) Vertreter: **Rippel, Andreas et al**
**Patentanwalt Dipl.-Ing. Rippel**
**Kommandit-Partnerschaft**
**Maxingstraße 34**
**1130 Wien (AT)**

(56) Entgegenhaltungen:
**EP-A- 0 825 344       DE-A1- 3 601 289**
**US-A- 4 794 544       US-A- 5 322 412**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Ermittlung der Nettofallhöhe von Turbinen.

Die Nettofallhöhe oder das Nutzgefälle ist der Unterschied zwischen dem Energieniveau unmittelbar vor der Turbine und nach dem Saugrohraustritt. Es ist daher genau jener Höhenunterschied, welcher der Turbine zur Energieumwandlung zur Verfügung steht und für den die Turbinenhersteller garantieren.

$$H_{netto} = Pegel_{OW} - Pegel_{UW} + v^2_{ow}/2g - \Delta h_{Eintritt} - \Delta h_{Rechen} - \Delta h_{Nischen} - \Delta h_{Strömung} - v^2_{uw}/2g$$

Folgende Glieder der oben angeführten Gleichung können nicht genau ermittelt werden, und verursachen Abweichungen zwischen der berechneten und der tatsächlich vorhandenen Nettofallhöhe:

- Strömungsgeschwindigkeit : Die Strömungsgeschwindigkeit am Querschnitt der Oberwasserpegelmessung $v^2_{ow}/2g$ läßt sich aufgrund der großen, meist geometrisch unbestimmten Querschnitte, die sich auch verändern können (Geschiebe und Schlamm), und ihrer Betriebsabhängigkeit, nur überschlägig ermitteln, und wird daher oft vernachlässigt.
- Eintrittsverlust $\Delta h_{Eintritt}$: Als Folge der Einschnürung am sich verjüngenden Einlaufquerschnitt und an der Einlaufschwelle, läßt sich der Verlust nur überschlägig über Beiwerte und dem Volumenstrom berechnen.
- Rechenverlust $\Delta h_{Rechen}$: Wie Laborversuche für Rechenanlagen von Kraftwerken gezeigt haben, wird durch eine Pegelmessung unmittelbar vor und nach dem Einlaufrechen meist eine zu große Differenz gemessen. Der Pegelstand unmittelbar vor dem Rechen ist aufgrund der Stauwirkung des Einlaufes etwas höher als es der unbeeinflußten Strömung entsprechen würde. Im Gegensatz dazu ermittelt die Pegelmessung unmittelbar nach dem Rechen aufgrund der höheren Geschwindigkeit des Triebwassers nach der Querschnittsverengung einen geringeren Wert.
- Nischenverluste $\Delta h_{Nischen}$: aufgrund der Nischen an den Seitenwänden und Öffnungen an der Decke für Dammbalken und Notverschlüssen im Einlauf- und Auslaufbereich treten Verwirbelungen auf. Die Wirbelbildung bewirkt Verluste, die aber im allgemeinen vernachlässigbar sind.
- Strömungsverluste $\Delta h_{Strömung}$ : Aufgrund der Reibung vom Eintritt bis zur Turbine und von der Turbine bis zum Saugrohraustritt. Auch diese Verluste sind im Allgemeinen von untergeordneter Bedeutung.
- Die Strömungsgeschwindigkeit unmittelbar nach dem Austritt aus dem Saugrohr, $v^2_{uw}/2g$ kann über den Volumenstrom und den Austrittsquerschnitt berechnet werden. Dabei werden aber nicht jene Energieanteile erfaßt, die zusätzlich aufgrund des noch vorhandenen Dralles im abströmenden Wasser vorhanden sind und nicht am Turbinenlaufrad umgesetzt worden sind.

Da die meisten der oben angeführten Faktoren in Niederdruckanlagen nur sehr kleine Werte annehmen und sich teilweise gegenseitig aufheben, können manche vernachlässigt werden. Andererseits kommt dem Austrittsverlust ($v^2_{uw}/2g$) bei Kraftwerken mit geringer Fallhöhe und großem Durchfluß eine größere Bedeutung zu, weil auch der prozentuelle Anteil an den Verlusten mehr vernachlässigbar ist.

Das Dokument US 5322412 offenbart eine Methode der Optimierung des Betriebes einer Wasserturbine, ohne die Absolutwerte deiner Betriebsparametern kennen zu müssen.

Die Erfindung hat es sich zum Ziel gesetzt, die Nettofallhöhe einfach und sicher zu berechnen. Erreicht wird dies dadurch, daß der tatsächliche Betriebspunkt der Turbine aus den vom Turbinenregler ausgegebenen Turbinenparametern, dem Istwert, bestimmt wird, mit dem aus einer Vergleichsrechnung ermittelten Wert, dem Sollwert, verglichen wird, und anschließend die dem Turbinenregler eingegebene Fallhöhe solange verändert wird, bis Ist- und Sollwert wenigstens im wesentlichen übereinstimmen.

Da sowohl die Istwerte als auch die Sollwerte von ein und den selben funktionalen Zusammenhängen (hergeleitet aus Berechnung, Modellversuch, Index- und Wirkungsgradmessung, ....) abgeleitet werden, stimmt dann die korrigierte Nettofallhöhe mit der an der Turbine tatsächlich herrschenden Nettofallhöhe überein.

Zweckmäßig wird dabei zum Vergleich von Istwert und Sollwert das Muscheldiagramm oder ein ähnliches Diagramm mit den erforderlichen Parametern benützt.

Das mit den heutigen Berechnungsmethoden und durch Modellversuchen ermittelte Muscheldiagramm oder ähnliche Diagramme, die Zusammenhänge zwischen den Turbinenparametern (Fallhöhe, Durchfluß, Leistung, Wirkungsgrad, Laufradöffnung, Leitapparatöffnung, etc...) erfassen, stimmt sehr genau mit den tatsächlichen Strömungsverhältnissen in den ausgeführten Anlagen überein. Ein und dasselbe Muscheldiagramm bzw. Parameterdiagramm wird sowohl in der Leittechnik als auch im Turbinenregler hinterlegt und dient als Grundlage für die Betriebsführung und den optimalen Zusammenhängen zwischen Leitapparat- und Laufradöffnungen an den entsprechenden Arbeitspunkten.

Nachstehend ist die Erfindung anhand der Zeichnungen näher beschrieben, ohne auf das gezeigte bzw. beschriebene Ausführungsbeispiel beschränkt zu sein. Dabei ist in Fig. 1 schematisch eine Rohrturbinenanlage mit darüber gezeichneter Energielinie dargestellt und die Fig. 2 und 3 zeigen Muscheldiagramme beim Ist- und Sollzustand.

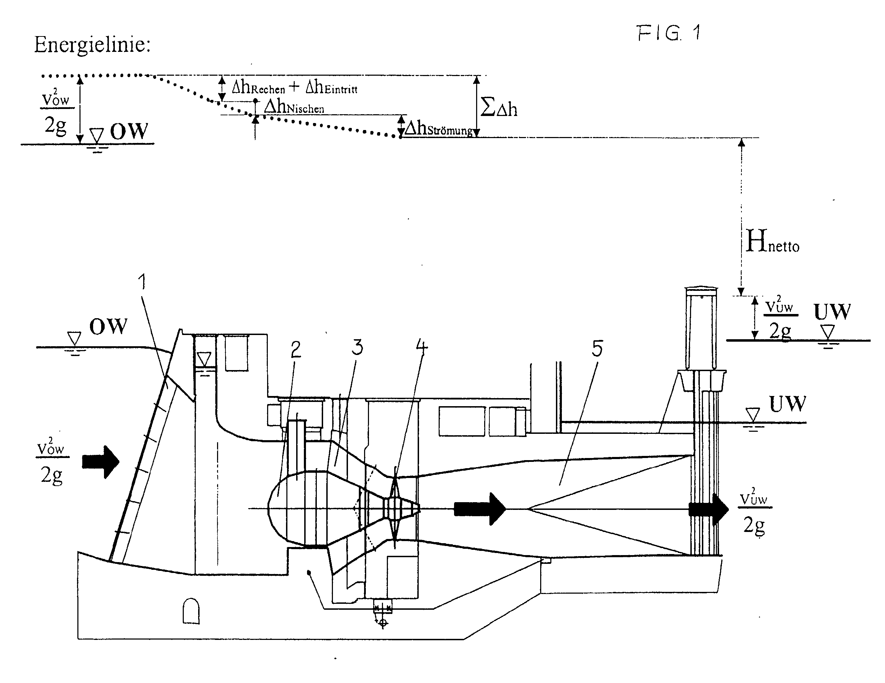

Gemäß Fig. 1 strömt das Wasser vom Oberwasser OW mit der Geschwindigkeit $V_{ow}$ durch einen Rechen 1 einer Rohrturbine 2 zu, die Stützschaufeln 3 mit anschließenden, durch Mittellinien angedeuteten Leitschaufeln und ein Laufrad 4 aufweist. Über ein Saugrohr 5 strömt das Wasser mit der Geschwindigkeit $v_{uw}$ in das Unterwasser UW.

Oberhalb der gezeichneten Anlage ist über die Strömungsstrecke die Energielinie mit den eingangs beschriebenen Verlusten aufgetragen.

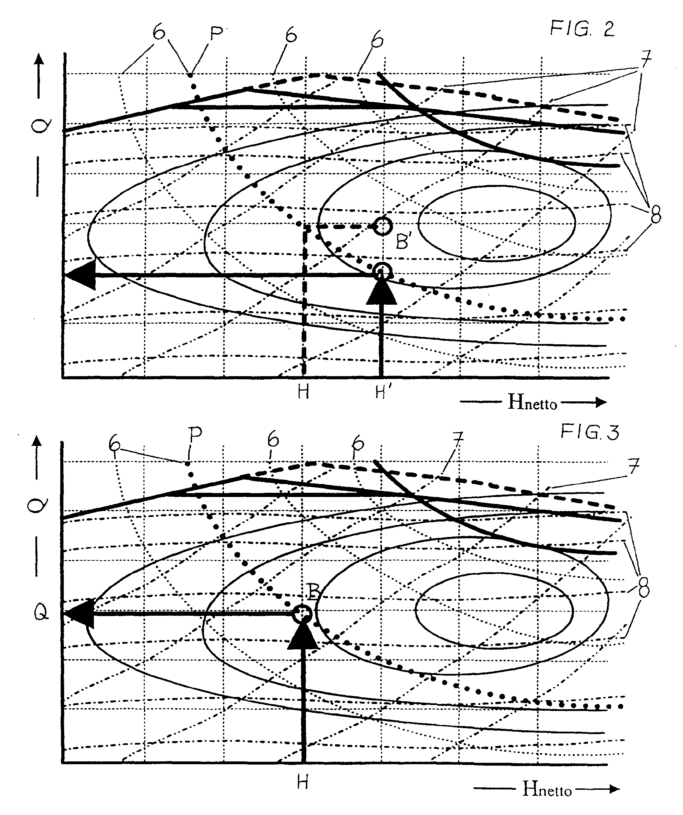

In die Muscheldiagramme nach den Fig. 2 und 3 sind außer den Wirkungsgradmuscheln Linien gleicher Leistung 6, Linien gleicher Leitradstellung 7 und Linien gleicher Laufradstellung 8 eingetragen.

Beispielhaft soll insbesondere an Hand der Fig. 2 dargestellt werden, wie es bei einer ungenau bestimmten Fallhöhe zu der Abweichung von Ist- und Sollparametern kommt.

Dem Turbinenregler wird von Außen (Leittechnik, Pegelmeßsystem, etc...) die unrichtige Fallhöhe H', meist die Nettofallhöhe, mitgeteilt. Um einen Arbeitspunkt zu definieren, muß noch ein weiterer Parameter mitübergeben werden, meist der gewünschte Durchfluß oder die gewünschte Leistung. Im Turbinenregler werden daraus die entsprechenden Leitapparat- und Laufradöffnungen aus einer Wertematrix mit den entsprechenden Stützpunkten interpoliert. Der Turbinenregler versucht nun die vorgegebene Leistung oder den vorgegebenen Durchfluß mit jenen Kombinationen von Laufrad- und Leitapparatöffnungen zu erreichen, die auf der der Linie der ihm übergebenen Nettofallhöhe H' liegen. Wird er nicht durch Begrenzungen daran gehindert, öffnet er solange den Leitapparat und dazu entsprechend das Laufrad, bis die gewünschte Leistung (oder der Durchfluß) erreicht ist.

Ist aber die ihm übergebenen Nettofallhöhe H' aufgrund von Meß- oder Berechnungsfehlern zu groß, kann er die geforderte Leistung erst bei größeren Leitapparat- und Laufradöffnungen erreichen. Da an der Maschine in Wirklichkeit eine kleinere Nettofallhöhe H vorherrscht, stimmen die vom Turbinenregler angefahrenen Leitapparat- und Laufradöffnungen (auf der Linie der falsch ermittelten Nettofallhöhe) nicht mit den Leitapparat- oder Laufradöfnungen überein, die er bei richtig bestimmter Nettofallhöhe erreichen würde.

Hier setzt nun das neue Verfahren an, um jene Nettofallhöhe H zu ermitteln, die am Laufrad tatsächlich herrscht. Mit einer nur ungenau ermittelten Nettofallhöhe H' (es genügt die Bruttofallhöhe: Oberwasserpegel - Unterwasserpegel) wird dem Turbinenregler noch die gewünschte Leistung P oder der Durchfluß Q übergeben. Der Turbinenregler versucht nun die gewünschte Leistung zu erreichen, und öffnet den Leitapparat und mit ihm im Zusammenhang das Laufrad solange auf der falschen Nettofallhöhe H', bis die gewünschte Leistung abgegeben bzw. der Durchfluß Q erreicht wird.

Da jedoch die Fallhöhen H' und H nicht übereinstimmen, stimmt auch das Diagramm nach Fig. 2 nicht mehr, der Turbinenregler fährt eigentlich nach der Linie H um die Leistung P zu erreichen, der Betriebspunkt B' liegt im nicht mehr zutreffenden Diagramm auf der unrichtigen Nettofallhöhe H'.

In einer zweiten Rechnung, die auf die selben Daten zurückgreift, die auch im Turbinenregler implementiert sind, wird nun ermittelt, wo der Turbinenregler eigentlich stehen sollte, wenn die ihm übergebene Nettofallhöhe richtig wäre (Sollparameter).

Ergibt sich eine Abweichung der Parameter (Durchfluß, Leistung, Leitapparat- und Laufradöffnung, etc...), bedeutet dies, daß die dem Turbinenregler übergebene Nettofallhöhe H' falsch ist. Mit einem Korrekturwert, dessen Vorzeichen davon abhängt, ob die zunächst ungenau ermittelte Nettofallhöhe H' größer oder kleiner der tatsächlich vorherrschenden Nettofallhöhe H ist, wird nun die dem Turbinenregler übergebene Nettofallhöhe solange korrigiert, bis Ist- und Sollparameter übereinstimmen. Damit hat man auch die tatsächlich vorherrschende Nettofallhöhe H und den Betriebspunkt B am Laufrad gefunden, und die Energie kann am Laufrad optimal umgesetzt werden.

Beim erfindungsgemäßen Verfahren wird als Startwert nur eine Fallhöhe benötigt, die ungefähr der vorhandenen entspricht (Bruttofallhöhe = OW - UW). Nachdem die Turbine den von der Leittechnik oder durch Begrenzungen bestimmten Betriebspunkt erreicht hat, ist die Turbine von gemessenen Fallhöhen mit ihren Meßunsicherheiten unabhängig, und wird mittels des erfindungsgemäßen Verfahrens stets auf die tatsächlich vorhandene Fallhöhe geführt. Das Verfahren hat auch den Vorteil, daß im Betrieb jede Turbine für sich mit der tatsächlich wirkenden Nettofallhöhe betrieben wird, auch unabhängig von Einflüssen, die nicht direkt gemessen werden können (z.B. Querströmungen im Zu- und Abströmbereich).

Im Rahmen der Erfindung sind zahlreiche Abänderungen möglich. So kann jedes Diagramm, das einen Zusammenhang zwischen der Nettofallhöhe und anderen Parametern, insbesondere der Leistung herstellt , verwendet werden. Auch müssen die benötigten, aus der abgegebenen Leistung errechneten Werte nicht von einer Leittechnik eingegeben werden. Bei entsprechender Ausbildung des Turbinenreglers können diese Werte auch von diesem berechnet werden.

**Patentansprüche**

**1.** Verfahren zur Ermittlung der Nettofallhöhe von Turbinen, **dadurch gekennzeichnet, daß** der tatsächliche Betriebspunkt der Turbine aus den vom Turbinenregler ausgegebenen Turbinenparametern, dem Istwert, bestimmt wird, mit dem aus einer Vergleichsrechnung ermittelten Wert, dem Sollwert, verglichen wird, und anschließend die dem Turbinenregler eingegebene Fallhöhe solange verändert wird, bis Ist- und Sollwert wenigstens im wesentlichen übereinstimmen.

**2.** Verfahren nach Anspruch 1, **dadurch gekennzeichnet, daß** zum Vergleich von Istwert und Sollwert das Muscheldiagramm oder ein ähnliches Diagramm mit den erforderlichen Parametern benützt wird.

**Claims**

**1.** A method for determining the net head of turbines, **characterized in that** the actual operating point of the turbine is determined from the turbine parameters, the actual value, output by the turbine controller is compared with the value determined from a comparative calculation, the set value and the head subsequently input in the turbine controller is varied until actual and set values at least substantially correspond.

**2.** The method according to Claim 1, **characterized in that** for comparing actual value and set value the shell diagram or a similar diagram with the required parameters is used.

**Revendications**

**1.** Procédé de détermination de la hauteur de chute nette de turbines, **caractérisé en ce que** le point de fonctionnement effectif de la turbine est déterminé à partir de paramètres de turbine émis par le régulateur de turbine, la valeur effective, est comparé avec une valeur déterminée par un calcul comparatif, la valeur de consigne, et ensuite la hauteur de chute entrée dans le régulateur de turbine est modifiée jusqu'à ce que la valeur effective et la valeur de consigne concordent au moins essentiellement.

**2.** Procédé selon la revendication 1, **caractérisé en ce que** à des fins de comparaison de la valeur effective et de la valeur de consigne, le diagramme à courbes ovoïdes ou un diagramme similaire est utilisé avec les paramètres requis.

Energielinie:

$$\frac{v_{OW}^2}{2g}$$ ▽ OW

$\Delta h_{Rechen} + \Delta h_{Eintritt}$

$\Delta h_{Nischen}$

$\Sigma \Delta h$

$\Delta h_{Strömung}$

$H_{netto}$

$$\frac{v_{UW}^2}{2g}$$ UW ▽

FIG. 1

OW ▽

$$\frac{v_{OW}^2}{2g}$$ ➤

1    2    3    4    5

▽ UW

➤ $$\frac{v_{UW}^2}{2g}$$

EP 1 138 941 B1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5322412 A